# EUROPEAN PATENT SPECIFICATION

(11) **EP 4 307 429 B1**
(45) Date of publication and mention of the grant of the patent: **11.11.2026**
(21) Application number: 23775151.6
(22) Date of filing: 07.02.2023
(51) Int. Cl.: H01M 10/0567, H01M 10/42, H01M 4/38, H01M 4/525, H01M 4/587, H01M 4/505, H01M 10/0525, H01M 4/36, H01M 4/62, H01M 4/485

(54) **LITHIUM SECONDARY BATTERY WITH INHIBITED METAL DISSOLUTION**
LITHIUMSEKUNDÄRBATTERIE MIT INHIBIERTER METALLAUFLÖSUNG
BATTERIE SECONDAIRE AU LITHIUM À DISSOLUTION MÉTALLIQUE INHIBÉE

(30) Priority: 21.03.2022 KR 20220034571; 01.02.2023 KR 20230013790
(43) Date of publication of application: 17.01.2024
(73) Proprietor: LG Energy Solution, Ltd., Seoul 07335 (KR)
(72) Inventor: HAN, Jun Hyeok, Daejeon 34122 (KR); JI, Su Hyeon, Daejeon 34122 (KR); LEE, Chul Haeng, Daejeon 34122 (KR); AHN, Kyoung Ho, Daejeon 34122 (KR); SHIN, Won Kyung, Daejeon 34122 (KR); LEE, Won Tae, Daejeon 34122 (KR); OH, Young Ho, Daejeon 34122 (KR); JEONG, You Kyeong, Daejeon 34122 (KR)
(74) Representative: Hoffmann Eitle
(86) International application number: PCT/KR2023/001686
(87) International publication number: WO 2023/182648

(56) References cited:
- EP-A1- 3 780 223
- CN-A- 108 717 977
- CN-A- 112 490 490
- KR-A- 20140 100 290
- KR-A- 20190 065 157
- KR-B1- 101 773 680
- KR-B1- 101 884 568
- KR-B1- 102 217 302
- US-A1- 2014 234 729

## Description

### [Technical Field]

The present invention relates to a lithium secondary battery having inhibited exsolution of a metal, particularly a transition metal, into an electrolyte.

### [Background Art of the Invention]

In recent years, secondary batteries have been widely applied to small devices such as portable electronic devices, as well as medium and large devices such as battery packs for hybrid vehicles or electric vehicles, or power storage devices.

Graphite is used mainly as a negative electrode material of a lithium secondary battery, but it is difficult to realize the high capacity of a lithium secondary battery because graphite has a low capacity of 372 mAh/g per unit mass. Therefore, negative electrode materials forming compounds between lithium and metals, such as silicon, tin and oxides thereof, and the like, have been developed and used as non-carbon negative electrode materials having higher energy density than graphite in order to realize the high capacity of the lithium secondary battery. However, such non-carbon negative electrode materials have a high capacity, but have drawbacks in that a large amount of lithium is consumed during an initial charging/discharge cycle due to its low initial efficiency, and their reversible capacity loss may be large.

In this regard, there has been proposed a method capable of providing a lithium ion source or reservoir to a positive electrode material and overcoming the loss of irreversible capacity of a negative electrode using a material which is electrochemically active after the first cycle in order to prevent degradation of the overall performance of the battery. Specifically, there is a known method of applying an oxide including an excessive amount of lithium, such as Li₆CoO₄, Li₂NiO₂ or Li₅FeO₄, for example, as sacrificial positive electrode materials or irreversible additives (or overdischarge inhibitors).

However, such irreversible additives have a very low powder electrical conductivity of approximately 10⁻¹¹ S/cm, which is close to that of an insulator, due to their 2D percolating network. Such low powder electrical conductivity serves to increase the electrical resistance of the positive electrode, and such high electrical resistance acts to reduce battery performance (such as capacity, and the like). Also, the irreversible additives are structurally unstable, and thus may compensate for the loss of irreversible capacity of the negative electrode by preferentially providing lithium ions during an initial charging reaction of the battery. However, side reactions of an electrolyte may be caused as lithium ions are lost and metal ions such as nickel (Ni), cobalt (Co), and the like are exsoluted from the residual products into the electrolyte. Therefore, the irreversible additives have a limitation in that the performance (such as a capacity retention rate, and the like) of the battery may be degraded.

Therefore, there is a need for development of a lithium secondary battery capable of exhibiting low resistance in a state in which an irreversible additive, such as Li₆CoO₄, or the like, which may compensate for the loss of irreversible capacity of the negative electrode, is included in the positive electrode, and more effectively inhibiting and/or preventing metal ions (M⁺) from being exsoluted from the irreversible additive into the electrolyte.

Patent Document 2 describes a lithium ion battery, including a positive electrode, a negative electrode, and a non-aqueous electrolyte, wherein the positive electrode includes a positive ele3ctrode material, and the positive electrode material includes a high nickel positive electrode material and a positive electrode lithium supplement material Li₂NiO₂, as well as an additive having a specific chemical formula.

### [Related Art Documents]

### [Patent Documents]

Patent Document 1:Japanese Patent Application Laid-Open Publication No. 2019-61750
Patent Document 2: CN 112490490 A

### [Description of the Invention]

### [Technical Problem]

Therefore, the present invention is believed to solve at least some of the above problems. For example, an aspect of the present invention provides a lithium secondary battery that exhibits low battery resistance and has inhibited exsolution of metal ions (M+) from an irreversible additive while including Li₆CoO₄ containing an excessive amount of lithium, or the like as an irreversible additive.

### [Technical Solution]

To solve the above problems, according to one exemplary embodiment of the present invention, there is provided a lithium secondary battery, which includes an electrode assembly including a positive electrode, a negative electrode, and a separator interposed between the positive electrode and the negative electrode; and
an electrolyte composition including a lithium salt, an electrolyte additive having a unit represented by any one of the following Structural Formulas 1 to 4, and a non-aqueous solvent,
wherein the positive electrode includes a positive electrode active layer containing an irreversible additive represented by the following Formula 2, and
the electrolyte additive has a weight average molecular weight of less than 40,000 g/mole:

   [Formula 2] LiₐM_{b}M'_{1-b}O_{c}

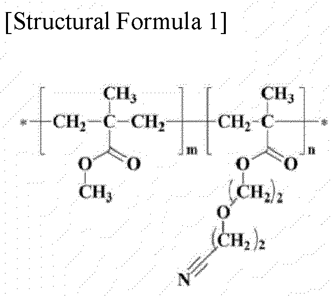

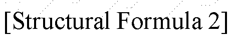

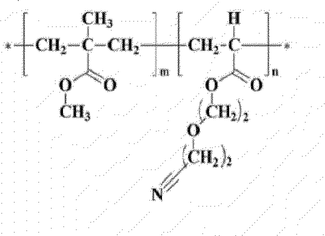

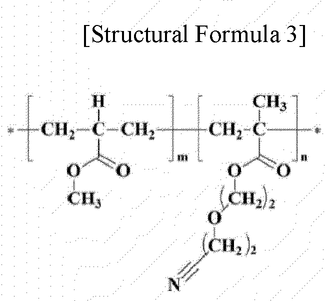

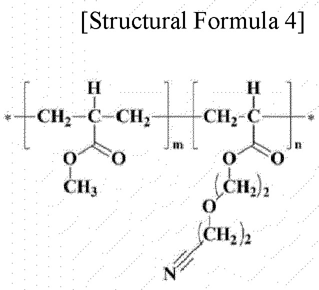

   (wherein:
   each of m and n is an integer ranging from 10 to 200,
   M includes one or more of Co, Ni, Mn, and Fe,
   M' includes one or more of Co, Ni, Mn, Fe, Al, Mg, Zn, and Ti, provided that M and M' are different from each other, and
   a, b and c are in a range of 1.50 ≤ a ≤ 6.5, 0 ≤ b ≤ 1,and 1.5 ≤ c ≤ 4.5, respectively).

Also, the unit represented by any one of Structural Formulas 1 to 4 may have an m:n ratio of 1:1.01 to 10.

In addition, the electrolyte additive may have a weight average molecular weight of 5,000 to 30,000 g/mole.

Also, the electrolyte additive may have a bimodal molecular weight distribution, and may have a polydispersity index (PDI) of 1.2 to 5.0.

In addition, the electrolyte additive may be included at less than 5% by weight based on the total weight of the electrolyte composition.

Also, the electrolyte composition may include an electrolyte auxiliary additive which includes one or more cyclic carbonate compounds selected from vinylene carbonate (VC), vinylethylene carbonate (VEC), and fluoroethylene carbonate (FEC); and one or more sultone compounds selected from 1,3-propane sultone (PS), 1,4-butane sultone, ethene sultone, 1,3-propene sultone (PRS), 1,4-butene sultone, and 1-methyl-1,3-propene sultone.

In addition, the irreversible additive represented by Formula 2 may include one or more of Li₆CoO₄, Li₆NiO₄, Li₂NiO₂, Li₆MnO₄, Li₂MnO₃, Li₅FeO₄, Li₆Co_{0.9}Al_{0.1}O₄, Li₆Co_{0.7}Zn_{0.3}O₄, Li₆Mn_{0.9}Al_{0.1}O₄, Li₅Fe_{0.9}Al_{0.1}O₄, Li₆Co_{0.5}Fe_{0.5}O₄, Li₆Ni_{0.5}Fe_{0.5}O₄, Li₆Ni_{0.9}Al_{0.1}O₄.

Also, the irreversible additive may be included at 0.01 to 5% by weight based on the total weight of the positive electrode active layer.

In addition, the positive electrode active layer may include one or more of lithium metal oxides represented by Formula 3 as a positive electrode active material:

[Formula 3] Liₓ[Ni_{y}Co_{z}Mn_{w}M¹ᵥ]O₂

wherein:
M¹ includes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, and v are in a range of 1.0 ≤ x ≤ 1.30, 0 ≤ y<1, 0 ≤ z ≤ 1, 0 ≤ w ≤ 1, 0 ≤ v ≤ 0.1, respectively, provided that y+z+w+v=1.

Also, the negative electrode may include a negative electrode active layer including a negative electrode active material, and the negative electrode active material may include one or more carbon materials selected from the group consisting of natural graphite, artificial graphite, expanded graphite, non-graphitizable carbon, carbon black, acetylene black, and ketjen black.

In addition, the negative electrode active material may further include one or more silicon materials selected from silicon (Si), silicon carbide (SiC),and silicon oxide (SiO_{q}; provided that 0.8 ≤ q ≤ 2.5). In this case, the silicon materials may be included at 1 to 20% by weight based on the total weight of the negative electrode active material.

According to another exemplary embodiment of the present invention, there is provided a lithium secondary battery module, which includes:
the lithium secondary battery according to the present invention; and
a module case having the lithium secondary battery installed therein.

### [Advantageous Effects]

A lithium secondary battery according to the present invention includes Li₆CoO₄ containing excess lithium, or the like as an irreversible additive in a positive electrode, and at the same time, includes an electrolyte additive of Structural Formulas 1 to 4 having a specific molecular weight in an electrolyte to realize low battery resistance and effectively prevent metal ions from being exsoluted from the irreversible additive, and thus has advantages of excellent battery performance and lifespan.

### [Best Mode for Carrying Out the Invention]

The present disclosure may have various modifications and various examples, and thus specific examples of the present disclosure are described in detail in the detailed description.

The terms "comprise," "include" and "have" used herein specify the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

Also, when a part of a layer, film, region or plate is disposed "on" another part, this includes not only a case in which one part is disposed "directly on" another part, but a case in which a third part is interposed therebetween. In contrast, when a part of a layer, film, region or plate is disposed "under" another part, this includes not only a case in which one part is disposed "directly under" another part, but a case in which a third part is interposed therebetween. In addition, in this application, "on" may include not only a case of disposed on an upper part but also a case of disposed on a lower part.

In addition, unless specifically stated otherwise, the symbol "*" refers to a bond formed between the same or different atoms or the terminals of the formulas.

In the present disclosure, the term "alkylene group" also refers to a linear or branched divalent unsaturated hydrocarbon group. As one example, the alkylene group may be substituted or unsubstituted. The alkylene group includes a methylene group, an ethylene group, a propylene group, an isopropylene group, a butylene group, an isobutylene group, a tert-butylene group, a pentylene group, a 3-pentylene group, and the like, but the present disclosure is not limited thereto.

In addition, in the present disclosure, the term "unit" or "repeating unit" refers to a component that constitutes an oligomer and/or a polymer, and includes a chemical structure derived from a monomer used during polymerization.

Hereinafter, the present invention will be described in detail.

### Lithium secondary battery

According to one exemplary embodiment of the present invention, there is provided a lithium secondary battery which includes:
an electrode assembly including a positive electrode, a negative electrode, and a separator interposed between the positive electrode and the negative electrode; and
an electrolyte composition including a lithium salt, an electrolyte additive having a unit represented by any one of the following Structural Formulas 1 to 4, and a non-aqueous solvent,
wherein the positive electrode includes a positive electrode active layer containing an irreversible additive capable of supplying an excessive amount of lithium ions, and
the electrolyte additive has a weight average molecular weight of less than 40,000 g/mole: 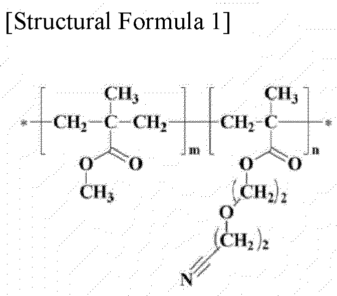 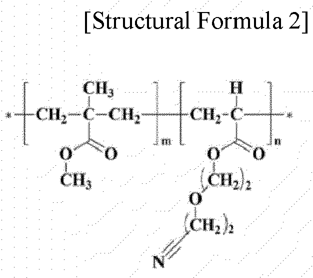 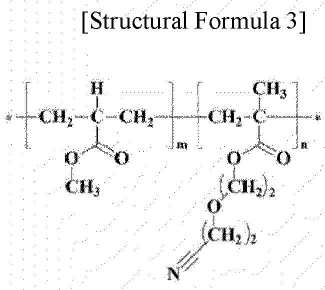 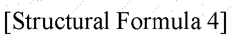 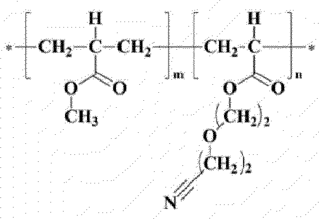
wherein:
   each of m and n is an integer ranging from 10 to 200.

The lithium secondary battery according to the present invention includes an electrode assembly including a positive electrode, a negative electrode, a separator interposed between the positive electrode and the negative electrode; and an electrolyte composition impregnated into the electrode assembly.

In this case, the positive electrode may have a positive electrode active layer, which contains a positive electrode active material along with an irreversible additive capable of supplying excess lithium ions, on a positive electrode current collector, and an electrolyte composition includes an electrolyte additive having a specific chemical structure and molecular weight in order to prevent and/or inhibit a metal from being exsoluted from the irreversible additive after the initial charging of the battery.

Described herein is an electrolyte additive having a unit generally represented by the following Formula 1: 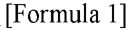 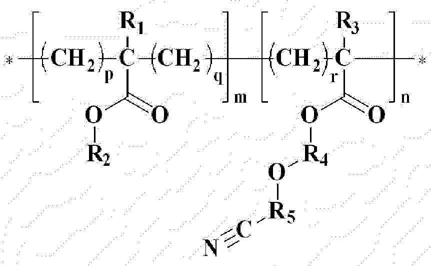 wherein:
each of R₁, R₂, and R₃ is hydrogen or an alkyl group having 1 to 6 carbon atoms,
each of R₄ and R₅ is an alkylene group having 1 to 6 carbon atoms,
each of p, q, and r is an integer ranging from 0 to 5,
each of m and n is an integer ranging from 10 to 200.

More specifically, in the unit represented by Formula 1, each of R₁, R₂, and R₃ may be hydrogen or a methyl group, each of R₄ and R₅ may be an ethylene group or a propylene group, and each of p, q, and r may be an integer ranging from 0 to 2.

In the present invention, the unit represented by Formula 1 includes one or more of the following Structural Formulas 1 to 4:

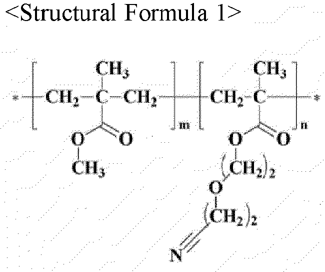

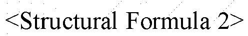

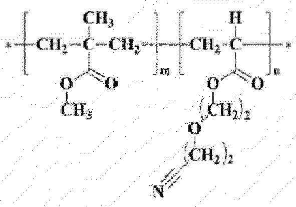

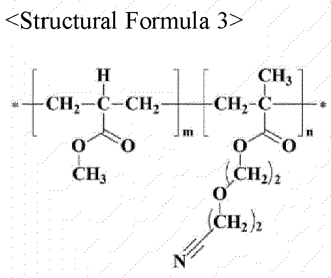

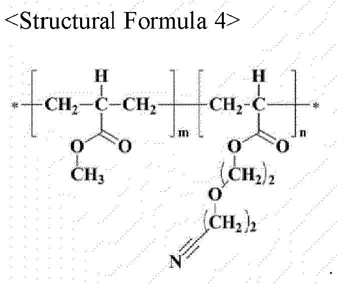

The unit represented by Formula 1 may have excellent solubility in an organic solvent, specifically a non-aqueous solvent.

Also, the unit represented by Formula 1 includes a repeating unit containing a cyano group (-CN), and thus may induce a coordinate bond between a cyano group and a metal ion exsoluted from the irreversible additive, particularly, a transition metal ion such as nickel (Ni), cobalt (Co), manganese (Mn), and the like. Therefore, the unit represented by Formula 1may easily capture metal ions, thereby preventing an increase in concentration of metal ions in an electrolyte.

Therefore, in the present invention, the ratio of the number (m) and the number (n) of repeating units containing a cyano group may be adjusted to satisfy a certain ratio range in order to optimize the solubility of the unit represented by Structural Formulas 1 to 4 in a non-aqueous solvent and metal ion capture efficiency. Specifically, the unit represented by Structural Formulas 1 to 4 may have an m:n ratio of 1:1.01 to 10, more specifically an m:n ratio of 1:2 to 10, 1:2 to 8, 1:2 to 6, 1: 3 to 7, 1: 5 to 10,or 1:3 to 5. When the ratio of n in Structural Formulas 1 to 4 is less than 1.01,metal ion capture efficiency may be significantly degraded, and an increase in battery resistance may also be caused, thereby reducing the charge/discharge capacity. On the other hand, when the ratio of n is greater than 10, ion conductivity may be degraded, and the battery safety at a high temperature may be reduced.

Also, the electrolyte additive may have a weight average molecular weight of less than 40,000 g/mole. Specifically the electrolyte additive may have a weight average molecular weight of 1,000 to 40,000 g/mole; 2,000 to 35,000 g/mole; 5,000 to 30,000 g/mole; 5,000 to 25,000 g/mole; 5,000 to 15,000 g/mole; 8,000 to 19,000 g/mole; or 10,000 to 20,000 g/mole. When the weight average molecular weight of the electrolyte additive is greater than or equal to 40,000 g/mole, electrolyte impregnability and the initial resistance and resistance increase rate of the battery may be remarkably enhanced, resulting in a reduced capacity. In this case, the efficiency of exsoluted metal ion capture may also be remarkably degraded as the aggregation of the electrolyte additive itself is induced. Even when the aggregation phenomenon is not induced, the electrolyte additive may form a precipitate with the captured metal ions to clog the pores of the separator, resulting in degraded electrical properties of the battery. Also, when the weight average molecular weight of the electrolyte additive is less than 1,000 g/mole, the ability of the electrolyte additive to capture metal ions may not be sufficiently achieved, resulting in a remarkable increase in concentration of metal ions exsoluted in the electrolyte composition.

In addition, the electrolyte additive may have a bimodal molecular weight distribution pattern. The expression "having a bimodal molecular weight distribution pattern" may mean that an electrolyte composition includes the unit represented by Structural Formulas 1 to 4 ,but also includes two electrolyte additives having different molecular weights. Here, the bimodal molecular weight distribution pattern may be measured by GPC, and may be calculated using a standard polystyrene conversion method.

As one example, the electrolyte additive includes the unit represented by Structural Formulas 1 to 4 , wherein the electrolyte additive includes a first electrolyte additive having a weight average molecular weight of 12,000±500 g/mole and a second electrolyte additive having a weight average molecular weight of 15,000±500 g/mole. In this case, a bimodal pattern spectrum having two peaks in the vicinity of molecular weights of 12,000 and 15,000, respectively, may be obtained, as measured for the electrolyte additive by GPC. In this case, the second electrolyte additive may be included at 10 to 200 parts by weight based on 100 parts by weight of the first electrolyte additive having a smaller weight average molecular weight, and specifically, it may be included at 10 to 100 parts by weight; 70 to 130 parts by weight; 110 to 200 parts by weight; or 110 to 150 parts by weight based on 100 parts by weight of the first electrolyte additive.

When the electrolyte additive having a bimodal molecular weight distribution is included in the present invention, an exsolution rate of the metal ions may be effectively lowered while minimizing an increase in resistance of the secondary battery. Specifically, in the electrolyte additive according to the present invention, as the weight average molecular weight increases within in a range having a weight average molecular weight of less than 40,000g/mole, the number of cyano groups in the electrolyte additive molecule increases, so the opportunity of coordinate bonding with transition metal ions such as nickel (Ni), cobalt (Co), manganese (Mn), etc. is increased. Accordingly, as the weight average molecular weight of the electrolyte additive increases within a range having a weight average molecular weight of less than 40,000g/mole, the electrolyte additive may have an increased performance in capturing metal ions, and at the same time, it may have an increased resistance to the surface of the positive electrode due to an increase in the degree of absorption to the surface of the positive electrode active layer containing nickel (Ni), cobalt (Co), manganese (Mn), etc. Therefore, by including two types of electrode additives having different weight average molecular weights within a range having a weight average molecular weight of less than 40,000g/mole, the present invention may effectively capture transition metals while preventing an increase in resistance to the electrode surface.

Also, the electrolyte additive may have a polydispersity index (PDI) of 1.2 to 5.0. The polydispersity index (PDI) is a value (Mw/Mn) obtained by dividing a weight average molecular weight (Mw) by a number average molecular weight (Mn) of an electrolyte additive. In this case, the electrolyte additive of the present invention may have a polydispersity index of 1.2 to 4.5, 1.2 to 4.0, 1.2 to 3.5, 1.2 to 3.0, 1.2 to 2.5, 1.2 to 1.9, 1.5 to 2.5, 1.8 to 3.1,or 1.6 to 2.2.

As one example, the electrolyte additive may have a polydispersity index of 1.8 to 2.1.

As another example, the electrolyte additive includes the unit represented by Structural Formulas 1 to 4 wherein, when the electrolyte additive has a bimodal molecular weight distribution because the electrolyte additive includes a first electrolyte additive having a weight average molecular weight of 12,000±500 g/mole and a second electrolyte additive having a weight average molecular weight of 15,000±500 g/mole, each of the first electrolyte additive and the second electrolyte additive may have a polydispersity index of 1.6 to 2.0.

In addition, the electrolyte additive may be included at less than 5% by weight based on the total weight of the electrolyte composition. Specifically, the electrolyte additive may be included at 0.05 to 5% by weight; 0.05 to 4% by weight; 0.05 to 3% by weight; 0.1 to 2.5% by weight; 0.1 to 2.2% by weight; 0.2 to 1.6% by weight; 0.9 to 1.9% by weight; 1.6 to 2.3% by weight; or 0.1 to 0.8% by weight based on the total weight of the electrolyte composition.

In the present invention, when the content of the electrolyte additive is adjusted within this content range, an increase in internal resistance of the battery due to excess electrolyte additive and the degradation of ion conductivity may be prevented. Also, it is possible to reduce side reactions between the electrolyte composition and the positive electrode active layer, and prevent a decrease in ability to capture the metal ions due to a trace amount of the electrolyte additive.

Meanwhile, the electrolyte composition includes a lithium salt and a non-aqueous solvent in addition to the above-described electrolyte additive.

In this case, the lithium salt may be applied without any particular limitation as long as it is used in the non-aqueous electrolyte in the art. Specifically, the lithium salt may include one or more selected from the group consisting of LiCl, LiBr, LiI, LiClO₄, LiBF₄, LiB₁₀Cl10, LiPF₆, LiCF₃SO₃, LiCF₃CO₂, LiAsF₆, LiSbF₆, LiAlCl₄, CH₃SO₃Li, (CF₃SO₂)₂NLi,and (FSO₂)₂NLi.

The concentration of the lithium salt is not particularly limited, but the lower limit of an appropriate concentration range is 0.5 mol/L or more, specifically0.7 mol/L or more, and more specifically 0.9 mol/L or more, and the upper limit of the appropriate concentration range is 2.5 mol/L or less, specifically 2.0 mol/L or less, and more specifically 1.5 mol/L or less. When the concentration of the lithium salt is less than 0.5 mol/L, ion conductivity may be degraded, resulting in degraded cycle characteristics and output characteristics of a non-aqueous electrolyte battery. Also, when the concentration of the lithium salt is greater than 2.5 mol/L, an increase in viscosity of an electrolyte solution for a non-aqueous electrolyte battery may be caused, and thus ion conductivity may be degraded and cycle characteristics and output characteristics of the non-aqueous electrolyte battery may also be degraded.

Also, when a large amount of the lithium salt is dissolved in a non-aqueous organic solvent at one time, a liquid temperature may increase due to the heat of dissolution of the lithium salt. As such, when the temperature of the non-aqueous organic solvent remarkably increases due to the heat of dissolution of the lithium salt, decomposition of a fluorine-containing lithium salt may be promoted, resulting in the generation of hydrogen fluoride (HF). Hydrogen fluoride (HF) is undesirable because it causes the degradation of battery performance. Therefore, the temperature for dissolving the lithium salt in anon-aqueous organic solvent is not particularly limited, but may be adjusted in a range of -20 to 80°C, specifically in a range of 0 to 60°C.

In addition, the non-aqueous organic solvent used in the electrolyte composition may be applied without any particular limitation as long as it is used in the non-aqueous electrolyte in the art. Specifically, for example, aprotic organic solvents such as N-methyl-2-pyrrolidinone, ethylene carbonate (EC), propylene carbonate (PC), propylene carbonate, butylene carbonate, dimethyl carbonate (DMC), diethyl carbonate (DEC), gamma-butyrolactone, 1,2-dimethoxyethane (DME), tetrahydrofuran, 2-methyltetrahydrofuran, dimethyl sulfoxide, 1,3-dioxolane, formamide, dimethyl formamide, dioxolane, acetonitrile, nitromethane, methyl formate, methyl acetate, phosphate triester, trimethoxy methane, dioxolane derivatives, sulfolane, methylsulfolane, 1,3-dimethyl-2-imidazolidone, propylene carbonate derivatives, tetrahydrofuran derivatives, ether, methyl propionate (MP), ethyl propionate (EP), propyl propionate (PP), and the like maybe used as the non-aqueous organic solvent.

Also, the non-aqueous organic solvent used in the present invention may be used alone, or two or more types may be used after mixing in any ratio and combination according to a purpose. Among them, propylene carbonate, ethylene carbonate, fluoroethylene carbonate, diethyl carbonate, dimethyl carbonate, and ethyl methyl carbonate are particularly preferred in terms of the electrochemical stability in an oxidation/reduction reaction and the chemical stability against heat or a reaction with a solute.

In addition, the electrolyte composition may further include an electrolyte auxiliary additive, when necessary, in order to prevent the collapse of the negative electrode due to the decomposition of a non-aqueous electrolyte under high-power conditions, or further improve low-temperature high-rate discharge characteristics, high-temperature stability, overcharge protection, a battery expansion inhibition effect at high temperature, and the like.

Specifically, the electrolyte auxiliary additive may include one or more of a cyclic carbonate compound and a sultone compound, which may be preferably used in combination. In this case, in an initial activation process of the battery, a more uniform SEI film may be formed on a surface of the negative electrode, and high temperature stability may be improved, which makes it possible to inhibit the gas generation due to electrolyte decomposition.

In this case, the cyclic carbonate compound may include one or more of vinylene carbonate (VC), vinyl ethylene carbonate (VEC), and fluoroethylene carbonate (FEC), and the sultone compound may include one or more of 1,3-propane sultone (PS), 1,4-butane sultone, ethene sultone, 1,3-propene sultone (PRS), 1,4-butene sultone, and 1-methyl-1,3-propene sultone.

Also, the electrolyte auxiliary additive may be included at 0.01 to 10% by weight, specifically 0.05 to 5% by weight, or 1.5 to 3% by weight based on the total weight of the electrolyte composition. In the present invention, when the content of the electrolyte additive is adjusted within this content range, it is possible to prevent the degradation of resistance characteristics of the battery by the additive being present in a state of being precipitated at room temperature due to excess auxiliary additive. Also, it is possible to prevent the insufficient realization of an effect of improving high-temperature lifespan characteristics due to the addition of a trace amount of the auxiliary additive.

Meanwhile, the positive electrode may have a positive electrode active layer, which contains a positive electrode active material along with an irreversible additive capable of supplying excess lithium ions, on a positive electrode current collector. Specifically, the positive electrode has a positive electrode active layer which is prepared by coating, drying and pressing a slurry including a positive electrode active material and the irreversible additive on positive electrode current collector, and may optionally further include a conductive material, a binder, and other additives, when necessary.

In this case, the positive electrode active material is a material that may cause an electrochemical reaction on the positive electrode current collector, and may be a lithium composite transition metal oxide including two or more elements selected from the group consisting of nickel (Ni), cobalt (Co), manganese (Mn), aluminum (Al), zinc (Zn), titanium (Ti), magnesium (Mg), chromium (Cr),and zirconium (Zr). For example, the positive electrode active material may include one or more of lithium metal oxides represented by Formula 3 capable of reversible intercalation and deintercalation of lithium ions:

[Formula 3] Liₓ[Ni_{y}Co_{z}Mn_{w}M¹ᵥ]O₂

wherein:
M¹ includes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
x, y, z, w, and v are in a range of 1.0 ≤ x ≤ 1.30, 0 ≤ y<1, 0 ≤ z ≤ 1, 0 ≤ w ≤ 1, 0 ≤ v ≤ 0.1, respectively, provided that y+z+w+v=1.

When the lithium metal oxide represented by Formula 3 is used as a positive electrode active material, the lithium metal oxide has an advantage of stably supplying high capacity electricity and/or high voltage electricity.

In this case, the lithium metal oxide represented by Formula 3 may include lithium cobalt oxide (LiCoO₂), lithium nickel oxide (LiNiO₂), lithium manganese oxide (LiMnO₂, LiMn₂O₄, and the like), lithium nickel cobalt manganese oxide (LiNi_{0.8}Co_{0.1}Mn_{0.1}O₂, LiNi_{0.6}Co_{0.2}Mn_{0.2}O₂, LiNi_{0.9}Co_{0.05}Mn_{0.05}O₂, LiNi_{0.6}Co_{0.2}Mn_{0.1}Al_{0.1}O₂, LiNi_{0.6}Co_{0.2}Mn_{0.15}Al_{0.05}O₂, LiNi_{0.7}Co_{0.1}Mn_{0.1}Al_{0.1}O₂), and the like.

Also, a content of the positive electrode active material may be in a range of 85 to 95 parts by weight, specifically in a range of 88 to 95 parts by weight, 90 to 95 parts by weight, 86 to 90 parts by weight, or 92 to 95 parts by weight based on 100 parts by weight of a positive electrode active layer.

Furthermore, the positive electrode active layer includes a positive electrode active material exhibiting electrical activity along with an irreversible additive imparting an irreversible capacity. In this case, the irreversible additive may be a compound represented by the following Formula 2:

[Formula 2] LiₐM_{b}M'_{1-b}O_{c}

wherein:
M includes one or more of Co, Ni, Mn, and Fe,
M' includes one or more of Co, Ni, Mn, Fe, Al, Mg, Zn, and Ti, provided that M and M' are different from each other,
a, b, and c are in a range of 1.50 ≤ a ≤ 6.5, 0 ≤ b ≤ 1,and 1.5 ≤ c ≤ 4.5, respectively.

When the irreversible additive includes lithium in excess, lithium may be provided for the lithium consumption caused by an irreversible chemical/physical reaction at the negative electrode during initial charging. Therefore, an increase in charging capacity of the battery and a decrease in irreversible capacity of the battery may be caused, resulting in improved lifespan characteristics.

Such an irreversible additive represented by Formula 2 may include one or more of Li₆CoO₄, Li₆NiO₄, Li₂NiO₂, Li₆MnO₄, Li₂MnO₃, Li₅FeO₄, Li₆Co_{0.9}Al_{0.1}O₄, Li₆Co_{0.7}Zn_{0.3}O₄, Li₆Ni_{0.9}Al_{0.1}O₄, Li₆Mn_{0.9}Al_{0.1}O₄, Li₅Fe_{0.9}Al_{0.1}O₄, Li₆Co_{0.5}Fe_{0.5}O₄, Li₆Ni_{0.5}Fe_{0.5}O₄, Li₆Ni_{0.9}Al_{0.1}O₄.

Among them, a cobalt-based additive such as Li₆CoO₄ or Li₆Co_{0.7}Zn_{0.3}O₄ may be used to replenish lithium ions lost in an irreversible reaction during the initial activation of the battery because the cobalt-based additive has a high content of lithium ions compared to nickel-containing oxides widely used in the art, which makes it possible to remarkably improve the charge/discharge capacity of the battery. Also, the cobalt-based additive has no side reactions caused by the exsolution of a transition metal during the charging/discharging cycle of the battery compared to iron- and/or manganese-containing oxides widely used in the art, the cobalt-based additive has an advantage of excellent battery stability.

In addition, the irreversible additive may have an average particle size of 0.1 to 10µm, specifically an average particle size of0.1 to 8µm; 0.1 to 5µm; 0.1 to 3µm; 0.5 to 2µm; 0.1 to 0.9µm; 0.1 to 0.5µm; 0.6 to 0.9µm; 1 to 4µm; 4 to 6µm;or 6 to 9µm. In the present invention, when the average particle size of the irreversible additive is controlled in the above particle size range, it is possible to prevent the degradation of powder electrical conductivity of the irreversible additive while increasing irreversible activity.

Also, the irreversible additive may be included at 0.01 to 5 parts by weight based on the total weight of the positive electrode active layer. Specifically, the irreversible additive may be included at 0.01 to 4 parts by weight; 0.01 to 3 parts by weight; 0.01 to 2 parts by weight; 0.1 to 1 parts by weight; 0.5 to 2 parts by weight; 1 to 3 parts by weight; 2 to 4 parts by weight; 1.5 to 3.5 parts by weight; 0.5 to 1.5 parts by weight; 1 to 2 parts by weight; 0.1 to 0.9 parts by weight; or 0.3 to 1.2 parts by weight based on the total weight of the positive electrode active layer.

In addition, the positive electrode active layer may further include a binder, a conductive material, other additives, and the like in addition to the positive electrode active material and the irreversible additive.

In this case, the conductive material may be used to improve the performance (such as electrical conductivity, and the like) of the positive electrode, and may include one or more selected from the group consisting of natural graphite, artificial graphite, carbon black, acetylene black, ketjen black, carbon nanotubes, graphene, and carbon fibers. For example, the conductive material may include acetylene black.

Also, the conductive material may be included at 0.5 to 5 parts by weight based on 100 parts by weight of the positive electrode active layer. Specifically, the conductive material may be included at 0.5 to 4 parts by weight; 0.5 to 3 parts by weight; 0.5 to 1 parts by weight; 0.5 to 2 parts by weight; 1 to 3 parts by weight; 2 to 4 parts by weight; 1.5 to 3.5 parts by weight; 0.5 to 1.5 parts by weight; or 1 to 2 parts by weight based on 100 parts by weight of the positive electrode active layer.

In addition, the binder may include one or more resins selected from the group consisting of a polyvinylidene fluoride-hexafluoropropylene copolymer (PVdF-co-HFP), polyvinylidene fluoride (PVdF), polyacrylonitrile, polymethyl methacrylate, and a copolymer thereof. As one example, the binder may include polyvinylidene fluoride.

Also, the positive electrode active layer may include 1 to 10 parts by weight, specifically 2 to 8 parts by weight, or 1 to 5 parts by weight of the binder based on 100 parts by weight of the positive electrode active layer.

In addition, an average thickness of the positive electrode active layer is not particularly limited, but specifically may be in a range of 50µmto 300µm, and more specifically in a range of 100µm to 200µm; 80µm to 150µm; 120µm to 170µm; 150µm to 300µm; 200µm to 300µm; or 150µm to 190µm.

Also, as the positive electrode current collector in the positive electrode, a material having high conductivity without causing a chemical change in the corresponding battery may be used. For example, stainless steel, aluminum, nickel, titanium, calcined carbon, and the like may be used. In the case of aluminum or stainless steel, those surface-treated with carbon, nickel, titanium, silver, and the like may also be used. Also, the positive electrode current collector may have fine irregularities formed on a surface thereof to enhance the adhesive strength of the positive electrode active material, and various forms thereof such as films, sheets, foil, nets, porous materials, foams, non-woven fabrics, and the like are possible. In addition, the average thickness of the positive electrode current collector may be properly adjusted in a range of 3 to 500 µm in consideration of the conductivity and total thickness of the manufactured positive electrode.

In addition, the negative electrode may be manufactured by coating, drying and pressing a negative electrode active layer including a negative electrode active material on the negative electrode current collector. In this case, the negative electrode active layer may optionally further include a conductive material as in the positive electrode, an organic binder polymer, and other additives, when necessary.

Here, the negative electrode active material may include one or more selected from the group consisting of lithium metal, nickel metal, copper metal, SUS metal, a carbon material capable of reversible intercalation/deintercalation of lithium ions, a metal or an alloy of these metals with lithium, a metal composite oxide, a material capable of doping and dedoping lithium, and a transition metal oxide.

As one example, the negative electrode active material may include one or more carbon materials selected from the group consisting of natural graphite, artificial graphite, expanded graphite, non-graphitizable carbon, carbon black, acetylene black, and ketjen black.

Also, the negative electrode active material may further include a silicon material in addition to the carbon material in order to further enhance the charge/discharge capacity of the battery. The silicon material refers to a material including silicon atoms as a main component. In this case, as such a silicon material, silicon (Si), silicon carbide (SiC), silicon monoxide (SiO), or silicon dioxide (SiO₂) may be used alone or in combination. When silicon monoxide (SiO) and silicon dioxide (SiO₂) are uniformly mixed or complexed as the silicon (Si)-containing material and included in the negative electrode active layer, it may be represented by silicon oxide (SiO_{q}; provided that 0.8 ≤ q ≤ 2.5).

In addition, the silicon material may be included at 1 to 20% by weight, specifically 3 to 10% by weight; 8 to 15% by weight; 13 to 18% by weight; or 2 to 8% by weight based on the total weight of the negative electrode active material. In the present invention, when the content of the silicon material is adjusted in the content range as described above, the energy density of the battery may be maximized.

Also, the negative electrode current collector is not particularly limited as long as it has high conductivity without causing a chemical change in the corresponding battery, and for example, as the negative electrode current collector, copper, stainless steel, aluminum, nickel, titanium, calcined carbon, and the like may be used, and in the case of copper or stainless steel, those surface-treated with carbon, nickel, titanium, silver, and the like may be used. In addition, the average thickness of the negative electrode current collector may be properly adjusted in a range of 1 to 500 µm in consideration of the conductivity and total thickness of the manufactured negative electrode.

In addition, the form of the lithium secondary battery according to the present invention is not particularly limited, but specifically may be cylindrical, prismatic, a pouch-type, or a coin-type. According to one exemplary embodiment of the present invention, the lithium secondary battery may be a cylindrical lithium secondary battery, a prismatic lithium secondary battery, a pouch-type lithium secondary battery, or a coin-type lithium secondary battery, particularly, a pouch-type lithium secondary battery.

When the lithium secondary battery according to the present invention has a configuration as described above, the lithium ions, which are irreversibly lost during an initial charging process, that is, an activation process, of a secondary battery, may be preserved, thereby enhancing the charge/discharge capacity. Also, the metal ions derived from the positive electrode active layer may be effectively captured to remarkably reduce a concentration of metal ions exsoluted in the electrolyte composition, thereby improving the increased resistance and side reactions and the degraded performance of the battery caused by the exsoluted metal ions even under high-temperature conditions.

### Lithium secondary battery module

According to one exemplary embodiment of the present invention, there is also provided a lithium secondary battery module, which includes:
the above-described lithium secondary battery according to the present invention; and
a module case having the lithium secondary battery installed therein.

The lithium secondary battery module according to the present invention is a battery module that includes a plurality of unit cells and a module case configured to accommodate the plurality of unit cells, wherein each of the unit cells includes the lithium secondary battery according to the present invention.

When the lithium secondary battery module includes the plurality of lithium secondary batteries of the present invention as the unit cells as described above, the lithium secondary battery module has advantages in that it has low initial resistance and a low resistance increase rate and a high voltage retention rate even under high-temperature conditions, and has a characteristic of remarkably reducing a concentration of the exsoluted metal ions in the electrolyte composition.

Meanwhile, the present invention provides a battery pack including the battery module, and a device including the battery pack as a power source.

In this case, specific examples of the device include power tools powered by an electric motor; electric cars including an electric vehicle (EV), a hybrid electric vehicle (HEV), and a plug-in hybrid electric vehicle (PREV); electric two-wheeled vehicles including an E-bike and an E-scooter; an electric golf cart; and a power storage system, but the present invention is not limited thereto.

Hereinafter, the present invention will be described in further detail with reference to the following examples and experimental example.

However, it should be understood that the following examples and experimental example are merely intended to illustrate the present invention, and the contents of the present invention are not limited to the following examples and experimental example.

### EXAMPLES AND COMPARATIVE EXAMPLES

### A) Preparation of electrolyte composition

As lithium salts, LiPF₆ and LiFSI were dissolved at concentrations of 0.8M and 0.7M, respectively, in a solvent prepared by mixing ethylene carbonate (EC), ethyl methyl carbonate (EMC),and diethyl carbonate (DMC) at a volume ratio of 20:5:75, and electrolyte additives were weighed and dissolved with the types and contents shown in Table 1 below. Thereafter, as electrolyte auxiliary additives, vinylene carbonate (VC) and 1,3-propanesultone (PS) were added at 2% by weight and 0.5% by weight, respectively, to prepare anon-aqueous electrolyte composition.

Here, in the case of Example 5, two electrolyte additives having a weight average molecular weight of 12,000 g/mole and 15,000 g/mole, respectively, while including the unit represented by Structural Formula 1 were mixed and used in a 1:1 weight ratio.

Also, the weight average molecular weights and PDIs of the electrolyte additives were measured using gel permeation chromatography (GPC), and molecular weight distribution patterns were analyzed from the resulting spectra. For the gel permeation chromatography (GPC), Alliance 4 equipment was stabilized. When the equipment was stabilized, a reference sample and a sampling specimen were injected into the equipment to obtain a chromatogram, and a molecular weight was calculated from the obtained results according to an analysis method (System: Alliance 4, Column: Agilent PL mixed B, Eluent: THF, Flow rate: 0.1 mL/min, Temp: 40°C, and Injection volume: 100µL). The measured results are shown in Table 1.

**[Table 1]**

| | Types of additives | | Molecular weight | | | Content [% by weight] |
|---|---|---|---|---|---|---|
| | Chemical structure | m/n | Mw [g/mole] | Distribution pattern | PDI | |
| Example 1 | 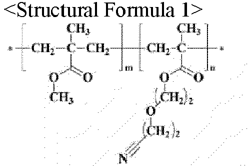 | 20/80 | 12,000 | Unimodal | 1.6 to 1.8 | 0.3 |
| Example 2 | | 20/80 | 15,000 | Unimodal | 1.6 to1.8 | 0.3 |
| Example 3 | | 20/80 | 15,000 | Unimodal | 1.6 to1.8 | 1.5 |
| Example 4 | | 20/80 | 15,000 | Unimodal | 1.6 to1.8 | 5.0 |
| Example 5 | | 20/80 | 12,000/15,000 | Bimodal | 1.6 to 1.8/1.6 to1.8 | 1.5 |
| Example 6 | 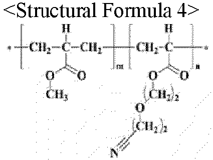 | 20/80 | 15,000 | Unimodal | 1.6 to1.8 | 0.3 |
| Comp. Example 1 | 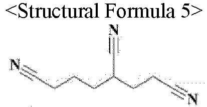 | - | 161.2 | Unimodal | 1.6 to1.8 | 0.3 |
| Comp. Example 2 | 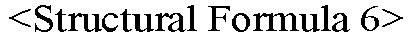 | (k/m/n) 30/1/69 | 51,000 | Unimodal | 1.6 to1.8 | 0.3 |
| Comp. Example 3 | 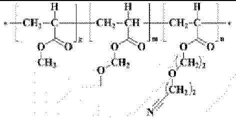 | (k/m/n) 30/1/69 | 51,000 | Unimodal | 1.6 to1.8 | 5.0 |

### B) Manufacture of lithium secondary battery

A mixed active material of LiNi_{0.6}Co_{0.2}Mn_{0.1}Al_{0.1}O₂ and LiNiO₂(1:1, wt./wt.) was prepared as a positive electrode active material, and the prepared active material, carbon black as a conductive material, and polyvinylidene fluoride as a binder were mixed at a weight ratio of 94:3:3 in N-methyl pyrrolidone (NMP) to form a slurry. Thereafter, the slurry was cast on an aluminum thin plate, dried at 120°C in a vacuum oven, and then rolled to manufacture a positive electrode.

Separately, a mixed active material prepared by mixing artificial graphite and silicon oxide (SiO₂) at a weight ratio of 85:15 was prepared as a negative electrode active material, and 97 parts by weight of the negative electrode active material and 3 parts by weight of a styrene butadiene rubber (SBR) were mixed in water to form a slurry. Then, the slurry was cast on a copper thin plate, dried at 130°C in a vacuum oven, and then rolled to manufacture a negative electrode.

An18µm-thick separator composed of polypropylene was interposed between the obtained positive and negative electrodes, and inserted into a case. Thereafter, each of the electrolyte compositions prepared in Examples 1 to 6 and Comparative Examples 1 to 3 was injected to manufacture a lithium secondary battery.

### Experimental Example

To evaluate the performance of the lithium secondary battery according to the present invention, experiments were performed as follows.

### A) Analysis of initial resistance

Each of the lithium secondary batteries manufactured in Examples and Comparative Examples was fully charged to a SOC of 100% under a condition of a voltage of 4.25V. Thereafter, the DC resistance of each of the fully charged lithium secondary batteries was measured, a DC resistance deviation rate of each of the lithium secondary batteries was calculated as the initial resistance based on the DC resistance value for the lithium secondary battery of Comparative Example 1 including HTCN as a monomolecular electrolyte additive. The results are shown in Table 2 below.

### B) Analysis of resistance increase rate and voltage retention rate after high-temperature storage

Each of the lithium secondary batteries manufactured in Examples and Comparative Examples was fully charged to a SOC of 100% under a condition of a voltage of 4.25V. Thereafter, the AC resistance and voltage of each of the fully charged lithium secondary batteries were measured, and the batteries were left at 72°C for 55 days. After 55 days had elapsed, the AC resistance and voltage of each of the charged lithium secondary batteries left at a high temperature were measured again, and a resistance increase rate and voltage retention rate according to measured resistances and voltages before and after the high-temperature storage were analyzed. The results are shown in Table 2 below.

### C) Analysis of exsolution amount of metal ions after high-temperature storage

Because metals exsoluted into an electrolyte were reduced on a surface of an active material layer of the negative electrode to induce side reactions, the content of metal ions remaining on a surface of the negative electrode was measured for the lithium secondary batteries subjected to resistance increase rate and voltage retention rate analysis after high-temperature storage as described above.

Specifically, each of the lithium secondary batteries of Examples and Comparative Example whose resistance increase rate and voltage retention rate were analyzed was disassembled to separate the negative electrode, and a powder of the active material layer obtained by scraping a surface of the active material layer included in the negative electrode was subjected to inductively coupled plasma analysis (ICP) to measure the contents of nickel (Ni), cobalt (Co) and manganese (Mn) ions remaining on a surface of the negative electrode in ppm units. The results are shown in Table 2 below.

**[Table 2]**

| | Initial resistance [%] | Resistance increase rate[%] | Voltage retention rate [%] | Metal exsolution amount [ppm] |
|---|---|---|---|---|
| Example 1 | -2.1 | 30.4 | 97.1 | 346 |
| Example 2 | -1.3 | 32.1 | 97.0 | 352 |
| Example 3 | +0.3 | 33.1 | 97.1 | 304 |
| Example 4 | +9.3 | 32.4 | 96.7 | 290 |
| Example 5 | -2.5 | 30.2 | 97.2 | 310 |
| Example 6 | -1.8 | 31.2 | 96.8 | 349 |
| Comp. Example 1 | - | 37.5 | 91.5 | 475 |
| Comp. Example 2 | +5.7 | 36.3 | 93.6 | 387 |
| Comp. Example 3 | +13.9 | 37.1 | 92.1 | 412 |

As shown in Table 2, it can be seen that the lithium secondary battery according to the present invention has low battery internal resistance as well as a low resistance increase rate, a high voltage retention rate, and a low metal exsolution rate even after being stored at a high temperature.

From these results, it can be seen that the lithium secondary battery according to the present invention includes Li₆CoO₄ containing excess lithium, or the like as the irreversible additive in the positive electrode, and at the same time, includes the electrolyte additive of Structural Formulas 1 to 4 having a specific molecular weight in the electrolyte to realize low battery resistance and effectively prevent metal ions from being exsoluted from the irreversible additive, and thus has excellent battery performance and lifespan.

## Claims

1. A lithium secondary battery, the lithium secondary battery comprising:
an electrode assembly comprising a positive electrode, a negative electrode, and a separator interposed between the positive electrode and the negative electrode; and
an electrolyte composition comprising a lithium salt, an electrolyte additive, and a non-aqueous solvent,
**characterized in that**
the electrolyte additive has a unit represented by any one of the Structural Formulas 1 to 4,
wherein the positive electrode comprises a positive electrode active layer containing an irreversible additive represented by the following Formula 2,
the electrolyte additive has a weight average molecular weight of less than 40,000 g/mole as determined according to the description:
[Formula 2] LiₐM_{b}M'_{1-b}O_{c} 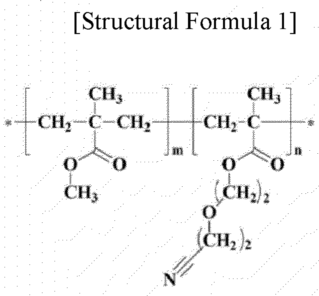 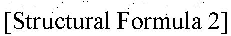 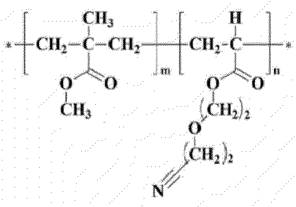 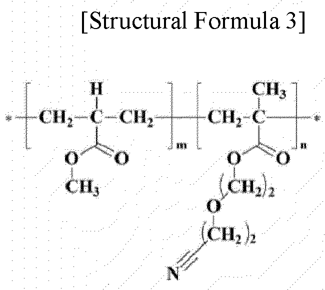 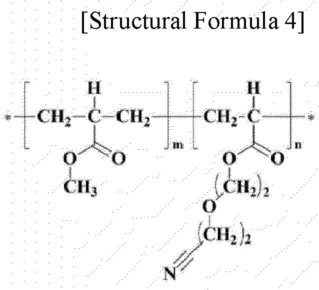
wherein:
each of m and n is an integer ranging from 10 to 200,
M comprises one or more of Co, Ni, Mn, and Fe,
M' comprises one or more of Co, Ni, Mn, Fe, Al, Mg, Zn, and Ti, provided that M and M' are different from each other, and
a, b, and c are in a range of 1.50 ≤ a ≤ 6.5, 0 ≤ b ≤ 1,and 1.5 ≤ c ≤ 4.5, respectively.

2. The lithium secondary battery of claim 1, wherein the unit represented by any one of Structural Formulas 1 to 4 has an m:n ratio of 1:1.01 to 10.

3. The lithium secondary battery of claim 1, wherein the electrolyte additive has a weight average molecular weight of 5,000 to 30,000 g/mole as determined according to the description.

4. The lithium secondary battery of claim 1, wherein the electrolyte additive has a bimodal molecular weight distribution.

5. The lithium secondary battery of claim 1, wherein the electrolyte additive has a polydispersity index (PDI) of 1.2 to 5.0 as determined according to the description.

6. The lithium secondary battery of claim 1, wherein the electrolyte additive is included at less than 5% by weight based on the total weight of the electrolyte composition.

7. The lithium secondary battery of claim 1, wherein the electrolyte composition comprises an electrolyte auxiliary additive comprising:
one or more cyclic carbonate compounds selected from vinylene carbonate (VC), vinylethylene carbonate (VEC), and fluoroethylene carbonate (FEC); and
one or more sultone compounds selected from 1,3-propanesultone (PS), 1,4-butanesultone, ethene sultone, 1,3-propenesultone (PRS), 1,4-butenesultone, and 1-methyl-

8. The lithium secondary battery of claim 1, wherein the irreversible additive represented by Formula 2 comprises one or more of Li₆CoO₄, Li₆NiO₄, Li₂NiO₂, Li₆MnO₄, Li₂MnO₃, Li₅FeO₄, Li₆Co_{0.9}Al_{0.1}O₄, Li₆Co_{0.7}Zn_{0.3}O₄, Li₆Mn_{0.9}Al_{0.1}O₄, Li₅Fe_{0.9}Al_{0.1}O₄, Li₆Co_{0.5}Fe_{0.5}O₄, Li₆Ni_{0.5}Fe_{0.5}O₄, Li₆Ni_{0.9}Al_{0.1}O₄.

9. The lithium secondary battery of claim 1, wherein the irreversible additive is included at 0.01 to 5% by weight based on the total weight of the positive electrode active layer.

10. The lithium secondary battery of claim 1, wherein the positive electrode active layer comprises one or more of lithium metal oxides represented by the following Formula 3 as a positive electrode active material:
[Formula 3] Liₓ[Ni_{y}Co_{z}Mn_{w}M¹ᵥ]O₂
wherein:
M¹comprises one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, and v are in a range of 1.0 ≤ x ≤ 1.30, 0 ≤ y<1, 0 ≤ z ≤ 1, 0 ≤ w ≤ 1, 0 ≤ v ≤ 0.1, respectively, provided that y+z+w+v=1.

11. The lithium secondary battery of claim 1, wherein the negative electrode comprises a negative electrode active layer comprising a negative electrode active material, and
the negative electrode active material comprises one or more carbon materials selected from the group consisting of natural graphite, artificial graphite, expanded graphite, non-graphitizable carbon, carbon black, acetylene black, and ketjen black.

12. The lithium secondary battery of claim 11, wherein the negative electrode active material further comprises one or more silicon materials selected from silicon (Si), silicon carbide (SiC) and silicon oxide (SiO_{q}; provided that 0.8 ≤ q ≤ 2.5).

13. The lithium secondary battery of claim 12, wherein the silicon materials are included at 1 to 20% by weight based on the total weight of the negative electrode active material.

14. A lithium secondary battery module comprising:
the lithium secondary battery according to claim 1; and
a module case having the lithium secondary battery installed therein.

## Patentansprüche

1. Lithiumsekundärbatterie, wobei die Lithiumsekundärbatterie umfasst:
eine Elektrodenanordnung, umfassend eine positive Elektrode, eine negative Elektrode und einen Separator, der zwischen der positiven Elektrode und der negativen Elektrode eingefügt ist, und
eine Elektrolytzusammensetzung, umfassend ein Lithiumsalz, ein Elektrolytadditiv und ein nichtwässriges Lösungsmittel,
**dadurch gekennzeichnet, dass**
das Elektrolytadditiv eine durch eine der Strukturformeln 1 bis 4 dargestellte Einheit aufweist,
wobei die positive Elektrode eine Aktivschicht für eine positive Elektrode umfasst, die ein durch die folgende Formel 2 dargestelltes irreversibles Additiv enthält,
das Elektrolytadditiv ein gewichtsmittleres Molekulargewicht von weniger als 40.000 g/mol, bestimmt gemäß der Beschreibung, aufweist:
[Formel 2] LiₐM_{b}M'_{1-b}O_{c} 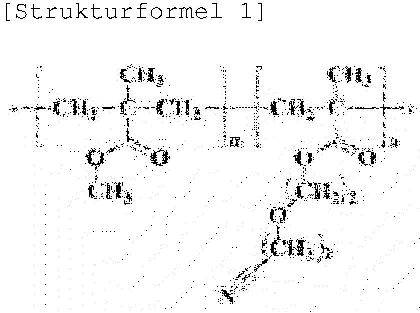 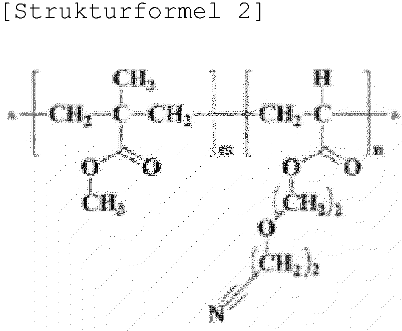 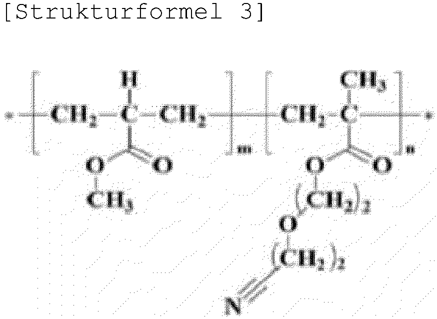 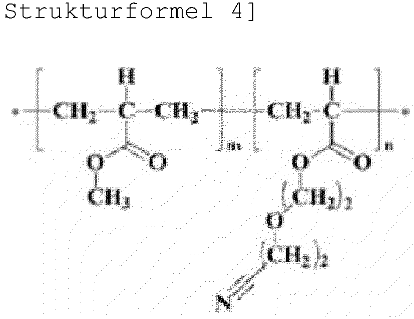
worin:
jedes m und n eine ganze Zahl im Bereich von 10 bis 200 ist,
M eines oder mehrere von Co, Ni, Mn und Fe umfasst,
M' eines oder mehrere von Co, Ni, Mn, Fe, Al, Mg, Zn und Ti umfasst, vorausgesetzt, dass sich M und M' voneinander unterscheiden, und
a, b und c in einem Bereich von 1,50≤a≤6,5, 0≤b≤1 bzw. 1,5≤c≤4,5 liegen.

2. Lithiumsekundärbatterie nach Anspruch 1, wobei die durch eine der Strukturformeln 1 bis 4 dargestellte Einheit ein m:n-Verhältnis von 1:1,01 bis 10 aufweist.

3. Lithiumsekundärbatterie nach Anspruch 1, wobei das Elektrolytadditiv ein gewichtsmittleres Molekulargewicht von 5.000 bis 30.000 g/mol, bestimmt gemäß der Beschreibung, aufweist.

4. Lithiumsekundärbatterie nach Anspruch 1, wobei das Elektrolytadditiv eine bimodale Molekulargewichtsverteilung aufweist.

5. Lithiumsekundärbatterie nach Anspruch 1, wobei das Elektrolytadditiv einen Polydispersitätsindex (PDI) von 1,2 bis 5,0, bestimmt gemäß der Beschreibung, aufweist.

6. Lithiumsekundärbatterie nach Anspruch 1, wobei das Elektrolytadditiv zu weniger als 5 Gew.-%, bezogen auf das Gesamtgewicht der Elektrolytzusammensetzung, enthalten ist.

7. Lithiumsekundärbatterie nach Anspruch 1, wobei die Elektrolytzusammensetzung ein Elektrolythilfsadditiv umfasst, das folgendes umfasst:
eine oder mehrere cyclische Carbonatverbindungen, ausgewählt aus Vinylencarbonat (VC), Vinylethylencarbonat (VEC) und Fluorethylencarbonat (FEC), und
ein oder mehrere Sultonverbindungen, ausgewählt aus 1,3-Propansulton (PS), 1,4-Butansulton, Ethensulton, 1,3-Propensulton (PRD), 1,4-Butensulton und 1-Methyl-1,3-propensulton.

8. Lithiumsekundärbatterienach Anspruch 1, wobei das durch Formel 2 dargestellte irreversible Additiv eines oder mehrere von Li₆CoO₄, Li₆NiO₄, Li₂NiO₂, Li₆MnO₄, Li₂MnO₃, Li5FeO4, Li6Co0,9Al0,1O4, Li6Co0,7Zn0,3O4, Li6Mn0,9Al0,1O4, Li5Fe0,9Al0,1O4, Li6Co0,5Fe0,5O4, Li6Ni0,5Fe0,5O4, Li6Ni0,9Al0,1O4 umfasst.

9. Lithiumsekundärbatterie nach Anspruch 1, wobei das irreversible Additiv zu 0,01 bis 5 Gew.-%, bezogen auf das Gesamtgewicht der Aktivschicht für eine positive Elektrode, enthalten ist.

10. Lithiumsekundärbatterie nach Anspruch 1, wobei die Aktivschicht für eine positive Elektrode ein oder mehrere Lithiummetalloxide, dargestellt durch die folgende Formel 3, als Aktivmaterial für eine positive Elektrode umfasst:
[Formel 3] Liₓ[Ni_{y}Co_{z}Mn_{w}M¹_{y}]O₂
worin
M¹ ein oder mehrere Elemente, ausgewählt aus der Gruppe, bestehend aus W, Cu, Fe, V, Cr, Ti, Zr, Zn, Al, In, Ta, Y, La, Sr, Ga, Sc, Gd, Sm, Ca, Ce, Nb, Mg, B und Mo, umfasst und
x, y, z, w und v in einem Bereich von 1,0≤x≤1,30, 0≤y<1, 0≤z≤1, 0≤w≤1 bzw. 0≤v≤0,1 liegen, vorausgesetzt, dass y+z+w+v=1.

11. Lithiumsekundärbatterie nach Anspruch 1, wobei die negative Elektrode eine Aktivmaterialschicht für eine negative Elektrode, umfassend ein Aktivmaterial für eine negative Elektrode, umfasst und
das Aktivmaterial für eine negative Elektrode ein oder mehrere Kohlenstoffmaterialien, ausgewählt aus der Gruppe, bestehend aus Naturgraphit, künstlichem Graphit, expandiertem Graphit, nicht-graphitierbarem Kohlenstoff, Ruß, Acetylenruß und Ketjen-Ruß, umfasst.

12. Lithiumsekundärbatterie nach Anspruch 11, wobei das Aktivmaterial für eine negative Elektrode ferner ein oder mehrere Siliciummaterialien, ausgewählt aus Silicium (Si), Siliciumcarbid (SiC) und Siliciumoxid (SiO_{q}, vorausgesetzt, dass 0,8≤q≤2,5) umfasst.

13. Lithiumsekundärbatterie nach Anspruch 12, wobei die Siliciummaterialien zu 1 bis 20 Gew.-%, bezogen auf das Gesamtgewicht des Aktivmaterials für eine negative Elektrode, enthalten sind.

14. Lithiumsekundärbatteriemodul, umfassend:
die Lithiumsekundärbatterie gemäß Anspruch 1 und
ein Modulgehäuse mit der darin eingebauten Lithiumsekundärbatterie.

## Revendications

1. Batterie secondaire au lithium, la batterie secondaire au lithium comprenant :
un ensemble électrode comprenant une électrode positive, une électrode négative et un séparateur interposé entre l'électrode positive et l'électrode négative ; et
une composition électrolytique comprenant un sel de lithium, un additif d'électrolyte et un solvant non aqueux,
**caractérisée en ce que**
l'additif d'électrolyte présente un motif représenté par l'une quelconque des Formules structurelles 1 à 4,
dans laquelle l'électrode positive comprend une couche active d'électrode positive contenant un additif irréversible représenté par la Formule 2 suivante,
l'additif d'électrolyte présente une masse moléculaire moyenne en poids de moins de 40 000 g/mole telle que déterminée selon la description :
[Formule 2] LiₐM_{b}M'_{1-b}O_{c} 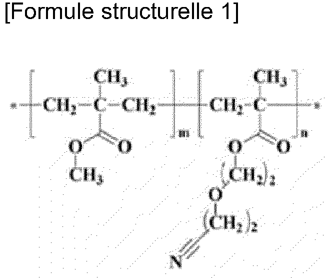 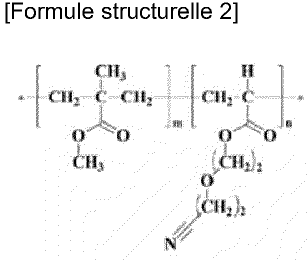 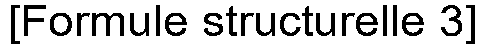 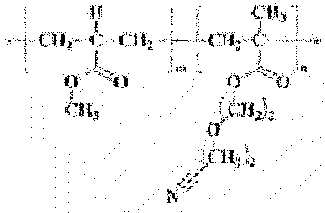 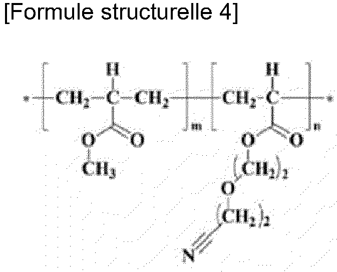
dans lesquelles :
chacun de m et n est un nombre entier allant de 10 à 200,
M comprend un ou plusieurs parmi Co, Ni, Mn et Fe,
M' comprend un ou plusieurs parmi Co, Ni, Mn, Fe, AI, Mg, Zn et Ti, à condition que M et M' soient différents l'un de l'autre, et
a, b, et c sont respectivement dans une plage de 1,50 ≤ a ≤ 6,5, 0 ≤ b ≤ 1 et 1,5 ≤ c ≤ 4,5.

2. Batterie secondaire au lithium selon la revendication 1, dans laquelle le motif représenté par l'une quelconque des Formules structurelles 1 à 4 présente un rapport m:n de 1:1,01 à 10.

3. Batterie secondaire au lithium selon la revendication 1, dans laquelle l'additif d'électrolyte présente une masse moléculaire moyenne en poids de 5 000 à 30 000 g/mole telle que déterminée selon la description.

4. Batterie secondaire au lithium selon la revendication 1, dans laquelle l'additif d'électrolyte présente une distribution bimodale des masses moléculaires.

5. Batterie secondaire au lithium selon la revendication 1, dans laquelle l'additif d'électrolyte présente un indice de polydispersité (PDI) de 1,2 à 5,0 tel que déterminé selon la description.

6. Batterie secondaire au lithium selon la revendication 1, dans laquelle l'additif d'électrolyte est inclus à moins de 5 % en poids sur la base du poids total de la composition électrolytique.

7. Batterie secondaire au lithium selon la revendication 1, dans laquelle la composition électrolytique comprend un additif auxiliaire d'électrolyte comprenant :
un ou plusieurs composés de carbonate cyclique sélectionnés parmi le carbonate de vinylène (VC), le carbonate de vinyléthylène (VEC) et
le carbonate de fluoroéthylène (FEC) ; et
un ou plusieurs composés sultones sélectionnés parmi le 1,3-propanesultone (PS), le 1,4-butanesultone, l'éthène sultone, le 1,3-propènesultone (PRS), le 1,4-butènesultone et le 1-méthyl-1,3-propène sultone.

8. Batterie secondaire au lithium selon la revendication 1, dans laquelle l'additif irréversible représenté par la Formule 2 comprend un ou plusieurs parmi Li₆CoO₄, Li₆NiO₄, Li₂NiO₂, Li₆MnO₄, Li₂MnO₃, Li₅FeO₄, Li₆Co_{0,9}Al_{0,1}O₄, Li₆Co_{0,7}Zn_{0,3}O₄, Li₆Mn_{0,9}Al_{0,1}O₄, Li₅Fe_{0,9}Al_{0,1}O₄, Li₆Co_{0,5}Fe_{0,5}O₄, Li₆Ni_{0.5}Fe_{0,5}O₄, Li₆Ni_{0,9}Al_{0,1}O₄.

9. Batterie secondaire au lithium selon la revendication 1, dans laquelle l'additif irréversible est inclus à hauteur de 0,01 à 5 % en poids sur la base du poids total de la couche active d'électrode positive.

10. Batterie secondaire au lithium selon la revendication 1, dans laquelle la couche active d'électrode positive comprend un ou plusieurs parmi des oxydes métalliques de lithium représentés par la Formule 3 suivante en tant que matériau actif d'électrode positive :
[Formule 3] Liₓ[Ni_{y}Co_{z}Mn_{w}M¹ᵥ]O₂
dans laquelle :
M¹ comprend un ou plusieurs éléments sélectionnés dans le groupe consistant en W, Cu, Fe, V, Cr, Ti, Zr, Zn, Al, In, Ta, Y, La, Sr, Ga, Sc, Gd, Sm, Ca, Ce, Nb, Mg, B et Mo, et
x, y, z, w, et v sont respectivement dans une plage de 1,0 ≤ x ≤ 1,30, 0 ≤ y<1, 0 ≤ z ≤ 1, 0 ≤ w≤ 1, 0 ≤ v ≤ 0,1, à condition que y+z+w+v=1.

11. Batterie secondaire au lithium selon la revendication 1, dans laquelle l'électrode négative comprend une couche active d'électrode négative comprenant un matériau actif d'électrode négative, et
le matériau actif d'électrode négative comprend un ou plusieurs matériaux carbonés sélectionnés dans le groupe consistant en graphite naturel, graphite artificiel, graphite expansé, carbone non graphitisable, noir de carbone, noir d'acétylène et noir de ketjen.

12. Batterie secondaire au lithium selon la revendication 11, dans laquelle le matériau actif d'électrode négative comprend en outre un ou plusieurs matériaux à base de silicium sélectionnés parmi le silicium (Si), le carbure de silicium (SiC) et l'oxyde de silicium (SiO_{q} ; à condition que 0,8≤q≤2,5).

13. Batterie secondaire au lithium selon la revendication 12, dans laquelle les matériaux à base de silicium sont inclus à hauteur de 1 à 20 % en poids sur la base du poids total du matériau actif d'électrode négative.

14. Module de batterie secondaire au lithium comprenant :
la batterie secondaire au lithium selon la revendication 1 ; et
un boîtier de module dans lequel est installée la batterie secondaire au lithium.
